# EUROPÄISCHE PATENTSCHRIFT

(11) **EP 0 929 219 B1**
(45) Veröffentlichungstag und Bekanntmachung des Hinweises auf die Patenterteilung: **09.04.2003**
(21) Anmeldenummer: 97909256.6
(22) Anmeldetag: 12.09.1997
(51) Int. Cl.: A01N 43/88

(54) **FESTE MISCHUNGEN VON 3-ISOPROPYL-2,1,3-BENZTHIADIAZIN-4-ON-2,2-DIOXIDSALZEN**
SOLID MIXTURES OF 3-ISOPROPYL1-2,1,3-BENZOTHIADIAZIN-4-ON-2,2-DIOXIDE SALTS
MELANGES SOLIDES CONTENANT DES SELS DE 3-ISOPROPYL-2,1,3-BENZOTHIADIAZIN-4-ONE-2,2-DIOXYDE

(30) Priorität: 27.09.1996 DE 19639839
(43) Veröffentlichungstag der Anmeldung: 21.07.1999
(73) Patentinhaber: BASF AKTIENGESELLSCHAFT, 67056 Ludwigshafen (DE)
(72) Erfinder: BRATZ, Matthias, D-67117 Limburgerhof (DE); JÄGER, Karl-Friedrich, D-67117 Limburgerhof (DE); BERGHAUS, Rainer, D-67346 Speyer (DE); PARG, Adolf, D-67098 Bad Dürkheim (DE)
(86) Internationale Anmeldenummer: EP9705002
(87) Internationale Veröffentlichungsnummer: WO98012922

(56) Entgegenhaltungen:
- EP-A- 0 043 349
- EP-A- 0 238 240
- WO-A-93/22917
- WO-A-94/09627
- WO-A-94/28712
- WO-A-95/28410
- DE-A- 19 505 036
- FR-A- 2 638 609
- US-A- 4 557 751
- US-A- 5 266 553
- US-A- 5 356 861
- CHEMICAL ABSTRACTS, vol. 119, no. 9, 30.August 1993 Columbus, Ohio, US; abstract no. 88939, XP002053476 & JP 05 043 403 A (KAO) 23.Februar 1993
- CHEMICAL ABSTRACTS, vol. 100, no. 13, 26.März 1984 Columbus, Ohio, US; abstract no. 98214, D.J.TURNER: "Effect of ammonium sulfate and related salts on the phytotoxicity of dichlorprop and other herbicides used for broadleaf weed control in cereals" XP002053477 & WEED RES., Bd. 24, Nr. 1, 1984, Seiten 67-77,

## Beschreibung

Die vorliegende Erfindung betrifft eine feste Mischung, enthaltend
A) ein Salz von 3-Isopropyl-2,1,3-benzthiadiazin-4-on-2,2-dioxid und
B) mindestens ein Alkylglycosid oder Alkylpolyglycosid.

Weiterhin betrifft die vorliegende Erfindung ein Verfahren zur Herstellung dieser festen Mischung, die Verwendung der festen Mischung und Verfahren zur Bekämpfung von unerwünschtem Pflanzenwuchs.

Im Bereich der Landwirtschaft sind Flüssigformulierungen etabliert, wobei im Fall der Schadpflanzenbekämpfung zur Steigerung der herbiziden Aktivität des Wirkstoffs und zur sicheren Unkrautbekämpfung unter Praxisbedingungen grenzflächenaktive Stoffe zugesetzt werden.

Die Flüssigformulierungen haben den Nachteil, daß große Mengen an Verpackungsmaterial, wie Metall- und Kunststoffkanister, anfallen und sicher entsorgt werden müssen. Weiter ist die sichere Lagerung von flüssigformulierten Produkten aufwendig. Es kann bei tiefen Lagertemperaturen auch zu unerwünschten Auskristallisationen kommen.

Aus der Literatur sind Benzthiadiazin-4-on-2,2-dioxide und deren Salze als herbizide Pflanzenschutzwirkstoffe bekannt (DE-A 15 42 836, DE-A 21 64 459, DE-A 22 17 722).

In der älteren deutschen Patentanmeldung mit dem Aktenzeichen 196 13 395.5 werden Granulate von hygroskopischen, wasserlöslichen Produkten, z.B. das Natriumsalz von 3-Isopropyl-2,1,3-benzthiadiazin-4-on-2,2-dioxid beschrieben. Vorzugsweise kommen diese Granulate ohne Hilfs- und Zusatzstoffe zur Anwendung.

In der DE-A 43 15 878 wird das feste, nicht-hygroskopische Magnesiumsalz von 3-Isopropyl-2,1,3-benzthiadiazin-4-on-2,2-dioxid beschrieben. Ebenso lehrt diese Schrift eine feste Mischung aus diesem Salz und an sich festem Natriumligninsulfonat, das als Dispergiermittel wirkt.

Der vorliegenden Erfindung lag die Aufgabe zu Grunde, auf Basis von salzen von 3-Isopropyl-2,1,3-benzthiadiazin-4-on-2,2-dioxid weitere feste Mischungen, die zudem eine gute biologische Wirkung zeigen, zur Verfügung zu stellen.

Demgemäß wurde eine feste Mischung, enthaltend
A) ein Salz von 3-Isopropyl-2,1,3-benzthiadiazin-4-on-2,2-dioxid und
B) mindestens ein Alkylglycosid oder Alkylpolyglycosid
gefunden.

Weiterhin wurde ein Verfahren zur Herstellung dieser festen Mischung, ferner die Verwendung der festen Mischung und ein Verfahren zur Bekämpfung von unerwünschtem Pflanzenwuchs gefunden.

Geeignete Salze von 3-Isopropyl-2,1,3-benzthiadiazin-4-on-2,2-dioxid sind die Alkalimetallsalze, besonders das Natrium- und das Kaliumsalz, die Erdalkalimetallsalze, besonders das Calcium-, das Magnesium- und das Bariumsalz, die Übergangsmetallsalze, besonders das Mangan-, das Kupfer-, das Zink- und das Eisensalz, die Ammoniumsalze, in denen bis zu 4 Wasserstoff-Atome durch C₁-C₄-Alkyl oder Hydroxy-C₁-C₄-alkyl und/oder ein Phenyl oder Benzyl ersetzt sein können, besonders das Ammonium-, das Diisopropylammonium- und das Tetramethylammoniumsalz.

Insbesondere bevorzugt sind das Natrium-, das Magnesium- und das Ammonium-Salz.

Die Herstellung von 3-Isopropyl-2,1,3-benzthiadiazin-4-on-2,2-dioxid und seiner Salze ist allgemein bekannt (vgl.
DE-A 15 42 836, DE-A 43 15 878 und DE-A 195 05 036).

Bevorzugt kommen Alkylpolyglycoside mit einem mittleren Polymerisationsgrad von 1,0 bis 1,7 in Betracht. Daneben sind Alkylpolyglycoside mit einer Alkylkette von C₆-C₁₈ bevorzugt.

Beispiele für Alkylglycoside und Alkylpolyglycoside sind u.a. AG 6202 (Akzo Nobel); Lutensol® GD 70 (BASF AG); Atplus® 258, Atplus® 264, Atplus® 430, Atplus® 460, Atplus® 469, Atplus® 450 (ICI Surfactants); Agrimul® PG 2067, Agrimul® PG 2069", Agrimul® PG 600", Agrimul PG 215" (Henkel).

Die bei den oben aufgeführten Beispielen genannten Marken (Handelsnamen) sind nicht nur auf letztere beschränkt, sondern sie stellen Stellvertreter für die jeweilige Stoffklasse dar. Weitere Marken (Handelsnamen) sind in folgenden Schriften aufgeführt:
McCutheon's; Emulsifiers and Detergents, Volume 1: Emulsifiers and Detergents 1994, North American Edition, McCutheon Division, Glen Rock NJ, USA;
McCutheon's; Emulsifiers and Detergents, Volume 2: Emulsifiers and Detergents 1994, International Edition, McCutheon Division, Glen Rock NJ, USA;
Surfactants in Europe, A Directory of surface active agents available in Europe, 2nd Ed. 1989, Terg Data, Darlington, England; Ash, Michael, Handbook of cosmetic and personal care additives, 1994, Gower Publishing Ltd, Aldershot, England;
Ash, Michael, Handbook of industrial Surfactants, 1993, Gower Publishing Ltd, Aldershot, England.

Die erfindungsgemäße Mischung kann weiterhin mindestens ein wasserlösliches anorganisches Salz aus der Gruppe Ammonium-, Alkalimetall- oder Erdalkalimetallsalz enthalten.

Als anorganische wasserlösliche Ammoniumsalze kommen Ammoniumverbindungen, neben Harnstoff und Thioharnstoff in Betracht.

Als wasserlösliche, anorganische Alkalimetallsalze können z.B. Natrium- und Kaliumsalze eingesetzt werden.

Geeignete wasserlösliche, anorganische Erdalkalimetallsalze sind Calcium- und Magnesiumsalze, besonders bevorzugt Magnesiumsalze.

Insbesonders bevorzugt sind als wasserlösliche anorganische Ammoniumsalze, u.a. Ammoniumsulfat, -hydrogensulfat, -chlorid, -acetat, -formiat, -oxalat, -carbonat, -hydrogencarbonat, -nitrat, -thiosulfat, -phosphat, -hydrogendiphosphat, -hydrogenmonophosphat, -hydrogenphosphat und -thiocyanat. Ganz besonders bevorzugt wird Ammoniumsulfat verwendet.

Die erfindungsgemäße Mischung kann weiterhin mindestens ein weiteres übliches Formulierungshilfsmittel enthalten. Als übliche Formulierungshilfsmittel kommen u.a. Dispergiermittel, Netzmittel, Bindemittel, Antischaummittel, Komplexbildner und Schmiermittel in Betracht.

Die geeigneten Dispergier- und Netzmittel sind anionisch, kationisch, amphoter oder nichtionisch. Bevorzugt sind anionische Netzmittel, wie Kondensationsprodukte aus aromatischen Sulfonsäuren und Formaldehyd, Ligninsulfonsäuresalze sowie deren Natrium-, Kalium- und Ammoniumsalze, Alkylsulfonate sowie Polyoxyethylenfettsäureester, Polyoxyethylen-Fettalkoholether, EO/PO-Blockpolymere etc.

Als Bindemittel (Kleber) kommen insbesondere Polyvinylpyrrolidon, Polyvinylalkohol, Polyvinylacetat, Vinylpyrrolidon-Vinylacetat-Copolymere, Carboxymethylcellulose, Stärke und Dextrine in Betracht.

Geeignete Antischaummittel sind z.B. Siliconöle oder Siliconölemulsionen, langkettige Alkohole, Fettsäuren und deren Salze, fluororganische Verbindungen, Acetylenalkohole und deren Gemische. Bevorzugt werden Siliconöle, Siliconölemulsionen und langkettige Alkohole eingesetzt.

Geeignete Komplexbildner sind z.B. Salze der Ethylendiamintetraessigsäure, Salze der Nitrilotriessigsäure, Salze von Polyphosphorsäuren und Gemisch hiervon.

Geeignete Schmiermittel sind unter anderem Magnesiumstearat, Natriumstearat, Talkum, Polyethylenglycole und deren Gemische.

Folgende Ausführungsformen der erfindungsgemäßen festen Mischung sind bevorzugt:
1) In einer bevorzugten Ausführungsform enthält die erfindungsgemäße Mischung als Komponente A das Natrium-, Magnesiumoder Ammoniumsalz von 3-Isopropyl-2,1,3-benzthiadiazin-4-on-2,2-dioxid und als Komponente B mindestens ein Alkylglycosid oder Alkylpolyglycosid.
   Hier kommen insbesondere Alkylpolyglycoside mit einem Polymerisationsgrad von 1,0 bis 1,7 in Betracht. Daneben sind Alkylpolyglycoside mit C₆-C₁₈-Alkylketten bevorzugt. Geeignete Alkylpolyglycoside sind beispielsweise AG 6206 (Akzo Nobel), Lutensol® GD70 (BASF AG), Atplus® 258, Atplus® 264, Atplus® 430, Atplus® 460, Atplus® 469, Atplus® 450 (ICI Surfactants), Agrimul® PG 2067, Agrimul® PG 2069", Agrimul® PG 600", Agrimul® PG 215" (Henkel).
2) In einer weiteren bevorzugten Ausführungsform enthält die erfindungsgemäße Mischung als Komponente A das Natrium-, Magnesium- oder Ammoniumsalz von 3-Isopropyl-2,1,3-benzthiadiazin-4-on-2,2-dioxid, als Komponente B mindestens ein Alkylglycosid oder Alkylpolyglycosid oder Gemische dieser oberflächenaktiven nichtionischen Stoffe und weiterhin mindestens ein wasserlösliches anorganisches Ammonium-, Alkali- oder Erdalkalimetallsalz oder Gemische dieser Salze.
   Bevorzugt enthält die erfindungsgemäße Mischung als wasserlösliches anorganisches Ammonium-, Alkalimetall- oder Erdalkalimetallsalz ein Ammoniumsalz.
   Ganz besonders bevorzugt kommt als Ammoniumsalz Ammoniumsulfat in Betracht.
   Außerordentlich bevorzugt sind hierbei Mischungen, die als Komponente B ein Alkylpolyglycosid oder Gemische dieser oberflächenaktiven Stoffe enthalten.
   Besonders außerordentlich bevorzugt sind hierbei Mischungen, die als Komponente A das Natriumsalz von 3-Isopropyl-2,1,3-benzthiadiazin-4-on-2,2-dioxid enthalten.
3) Eine weitere bevorzugte Ausführungsform der erfindungsgemäßen Mischung enthält als Komponente A das Natrium-, Magnesium oder Ammoniumsalz von 3-Isopropyl-2,1,3-benzthiadiazin-4-on-2,2-dioxid, als Komponente B mindestens ein Alkylglycosid oder Alkylpolyglycosid oder Gemische dieser oberflächenaktiven nichtionischen Stoffe und weiterhin mindestens ein weiteres übliches Formulierungshilfsmittel, wie oben genannt, oder Gemische dieser üblichen Formulierungshilfsmittel.
   Bevorzugt enthalten die erfindungsgemäßen Mischungen als weiteres Formulierungshilfsmittel ein oder mehrere Antischaummittel.
   Ganz besonders bevorzugt werden als Antischaummittel Siliconöle, Siliconölemulsionen, langkettige Alkohole und Gemische hiervon eingesetzt.
4) In einer weiteren bevorzugten Ausführungsform enthält die erfindungsgemäße Mischung als Komponente A das Natrium-, Magnesium- oder Ammoniumsalz von 3-Isopropyl-2,1,3-benzthiadiazin-4-on-2,2-dioxid, als Komponente B mindestens ein Alkylglycosid oder Alkylpolyglycosid oder Gemische dieser oberflächenaktiven nichtionischen Stoffe weiterhin mindestens ein wasserlösliches, anorganisches Ammonium-, Alkalimetall- oder Erdalkalimetallsalz und ein weiteres Formulierungshilfsmittel oder Gemische hiervon.
   Bevorzugt sind hierbei Mischungen, die als wasserlösliches Ammonium-, Alkali- oder Erdalkalimetallsalz, ein Ammoniumsalz oder Gemische hiervon enthalten.
   Besonders bevorzugt werden in derartigen Mischungen als weitere Formulierungshilfsmittel Antischaummittel eingesetzt.
   Insbesondere kommen hierbei weiterhin als Ammoniumsalz Ammoniumsulfat und als Antischaummittel beispielsweise Siliconöle, Siliconölemulsionen oder langkettige Alkohole in Betracht.
   Ganz besonders bevorzugt sind hierbei Mischungen, die als Komponente A das Natriumsalz von 3-Isopropyl-2,1,3-benzthiadiazin-4-on-2,2-dioxid enthalten.

Die voranstehend genannten bevorzugten Ausführungsformen der erfindungsgemäßen Mischungen können weiterhin Farbstoffe, Konservierungsmittel und weitere Pflanzenschutzwirkstoffe enthalten.

Als weitere Pflanzenschutzwirkstoffe eignen sich insbesondere herbizid- und wachstumsregulatorisch wirksame Verbindungen, z.B. 1,2,4-Thiadiazole, 1,3,4-Thiadiazole, Amide, Aminophosphorsäure und deren Derivate, Glyphosate, Glyphosinat, Aminotriazole, Anilide, (Het-)Aryloxyalkansäure und deren Derivate, Benzoesäure und deren Derivate, Benzothiadiazinone, Triketone, Hetaryl-Aryl-Ketone, Benzylisoxazolidinone, Meta-CF₃-phenylpyridine, Carbamate, Chinolinsäure und deren Derivate, Chloracetanilide, Cyclohexandionoximether, Diazine, Dichlorpropionsäure und deren Derivate, Dihydrobenzofurane, Dihydrofuran-3-one, Dinitroaniline, Dinitrophenole, Diphenylether, Dipyridyle, Halogencarbonsäuren und deren Derivate, Harnstoffe, N-Phenyluracile, Imidazole, Imidazolinone, Isoindoldione, Oxadiazole, Oxirane, Phenole, Aryloxy- oder Heteroaryloxyphenoxypropionsäureester, Phenylessigsäure und deren Derivate, Phenylpropionsäure und deren Derivate, Pyrazole, Phenylpyrazole, Pyridazine, Pyridincarbonsäure und deren Derivate, Pyrimidylether, Sulfonamide, Sulfonylharnstoffe, Triazine, Triazinone, Triazolinone, Triazolcarboxamide, Triketone, 4H-1,3-Benzoxazine, N-Phenylcarbamate und Thiocarbamate. Bevorzugt kommen als weitere Pflanzenschutzwirkstoffe in Betracht: Glyphosate, (Het-)Aryloxyalkansäure und deren Derivate, Benzoesäure und deren Derivate, Triketone, Hetaryl-Arylketone, Chinolinsäure und deren Derivate, Cyclohexandionoximether, Dichlorpropionsäure und deren Derivate, Dinitroaniline, Diphenylether, Dipyridyle, Halogencarbonsäuren und deren Derivate, Harnstoffe, Imidazolinone, Phenole, Aryloxy- oder Heteroaryloxyphenoxypropionsäureester, Phenylessigsäure und deren Derivate, Phenylpropionsäure und deren Derivate, Pyridazine, Pyridincarbonsäure und deren Derivate, Sulfonamide und Sulfonylharnstoffe.

Die Bestandteile der erfindungsgemäßen Mischung werden in der Regel in Form des jeweiligen technischen Produkts eingesetzt.

In der erfindungsgemäßen Mischung liegt der Anteil der Komponente A in der Regel bei 0,5 bis 90, bevorzugt bei 10 bis 85 und insbesondere bei 40 bis 85 Gew.-%, bezogen auf die fertige Mischung.

Der Anteil der Komponente B liegt im Normalfall bei 3 bis 40, bevorzugt bei 3 bis 25 Gew.-%, bezogen auf die fertige Mischung.

Falls die erfindungsgemäße Mischung weiterhin ein wasserlösliches anorganisches Ammoniumsalz oder Gemische dieser Salze enthält, liegt deren Anteil in der Regel bei 5 bis 60, insbesondere bei 5 bis 50 Gew.-%, bezogen auf die fertige Mischung.

Bei der Herstellung der erfindungsgemäßen Mischung geht man in der Regel von 3-Isopropyl-2,1,3-benzthiadiazin-4-on-2,2-dioxid oder einem seiner Salze aus.

Im Fall der Salze von 3-Isopropyl-2,1,3-benzthiadiazin-4-on-2,2-dioxid wird der technische Wirkstoff mit dem grenzflächenaktiven nichtionischen Stoff, mit den gegebenenfalls zugesetzten Ammonium-, Alkali- oder Erdalkalimetallsalzen, mit den gegebenenfalls weiteren Formulierungshilfsmitteln und gegebenenfalls mit Wasser innig vermischt. Alle Komponenten können in einem Schritt miteinander vermischt werden; es ist aber auch möglich, die Komponenten sukzessive einzumischen.

Die so erhaltene Rohmischung wird gegebenenfalls mit weiterem Wasser versetzt, so daß eine extrudierbare Masse entsteht. Anschließend wird extrudiert. Hierzu werden vorzugsweise Korb-, Radial- oder Dome-Extruder mit geringer Verdichtung des Granulatkorns verwendet. Das so durch Extrudergranulation erhaltene Granulat wird getrocknet und gegebenenfalls gesiebt.

Im Fall von 3-Isopropyl-2,1,4-benzthiadiazin-4-on-2,2-dioxid als solchem, wird.mit dem grenzflächenaktiven Stoff, mit den gegebenenfalls zugesetzten Ammonium-, Alkalimetall- oder Erdalkalimetallsalzen, mit gegebenenfalls weiteren Formulierungshilfsmitteln und gegebenenfalls Wasser und einem Protonenakzeptor, wie Natriumhydroxid, Kaliumhydroxid, Natriumhydrogencarbonat, Kaliumhydrogencarbonat, Calciumcarbonat, Magnesiumoxid, Natriumphosphat, Kaliumphosphat, Natriumsilicat oder Alkalisalze der Di-, Tri- oder Polyphosphorsäure oder Gemischen dieser Protonenakzeptoren vermischt. Alle Komponenten können in einem Schritt miteinander vermischt werden; es ist aber auch möglich, die Komponenten sukzessive zu vermischen.

Die so erhaltene Masse wird gegebenenfalls mit weiterem Wasser versetzt, so daß eine extrudierbare Masse entsteht und extrudiert diese anschließend. Zur Extrusion werden vorzugsweise Korb-, Radial- oder Dome-Extruder mit geringer Verdichtung des Granulatkorns verwendet.

Das erhaltene Granulat wird getrocknet und gegebenenfalls gesiebt. Der Protonenakzeptor wird zweckmäßigerweise im äquimolaren Verhältnis, bezogen auf den technischen Wirkstoff, eingesetzt. Es kann jedoch von Vorteil sein, einen Über- oder Unterschuß an Protonenakzeptor einzusetzen.

Ebenso ist es möglich, eine Wirbelschichtgranulation durchzuführen. Hierzu wird eine wäßrige Lösung, Emulsion oder Suspension der erfindungsgemäßen Mischung in einer Wirbelschichtgranulationsapparatur versprüht und agglomeriert.

Es ist aber auch möglich, Bestandteile der erfindungsgemäßen Mischung, die fest sind, in der Apparatur vorzulegen und mit einer Lösung, Emulsion oder Suspension der restlichen Bestandteile der erfindungsgemäßen Mischung zu besprühen und dabei zu agglomerieren.

Weiterhin eignen sich die Sprühtrocknung, die Mischergranulation und die Tellergranulation zur Herstellung der erfindungsgemäßen Mischungen.

Die so erhaltenen erfindungsgemäßen Mischungen zeichnen sich durch ein gutes Lösungsverhalten in Wasser aus.

Die erfindungsgemäßen Mischungen eignen sich zur Bekämpfung von unerwünschtem Pflanzenwuchs, indem man die Samen, die Pflanzen oder deren Lebensraum mit einer herbizid wirksamen Menge der erfindungsgemäßen Mischung behandelt.

Die grenzflächenaktiven Stoffe dienen dazu, die biologische Wirkung von salzen von 3-Isopropyl-2,1,3-benzthiadiazin-4-on-2,2-dioxid durch Förderung der Benetzung und/oder des Transports des Wirkstoffs auf der Oberfläche und in der Pflanze zu unterstützen.

Zur Applikation der erfindungsgemäßen Mischung geht man normalerweise so vor, daß man sie zunächst in der Regel mit der 25- bis 1000-fachen, vorzugsweise der 50- bis 200-fachen Menge Wasser vermischt. Danach bringt man die Spritzbrühe vor allem im Vorauflauf- oder Nachauflaufverfahren auf die Zielpflanzen und/oder in deren Lebensraum aus. Daneben kann man alternativ oder zusätzlich auch die Samen der Zielpflanze vor der Aussaat entsprechend behandeln.

Sind die durch Verdünnen mit Wasser erhältlichen Wirkstoffbrühen für gewisse Kulturpflanzen weniger verträglich, so können Ausbringungstechniken angewandt werden, bei welchen die Spritzbrühen mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen ("post-directed"- bzw. "lay-by"-Anwendung).

Die Aufwandmengen an Salzen von 3-Isopropyl-2,1,3-benzthiadiazin-4-on-2,2-dioxid in Form der erfindungsgemäßen Mischung betragen je nach Bekämpfungsziel, Jahreszeit, Zielpflanze und deren Wachstumsstadium 0,5 bis 7, vorzugsweise 0,5 bis 5 und insbesondere 1 bis 3 kg/ha Anbaufläche.

### Herstellbeispiele

### Beispiel 1

In einem Moulinette-Küchenmixgerät wurden 58,8 g Na⊕-Salz von 3-Isopropyl-2,1,3-benzthiadiazin-4-on-2,2-dioxid (Na⊕-Bentazon) 5,8 g Lutensol® GD 70 (BASF AG) inniglich vermischt. Die entstandene Masse wurde mittels eines Extruders (KAR-75, Fa. Fitzpatrick, Lochgröße 0,8 mm) extrudiert und anschließend wurde im Trockenschrank bei 60°C getrocknet.

### Beispiel 2

In einem Moulinette-Küchenmixgerät wurden 52,5 g NH₄^{⊕}-Bentazon und 10,9 g Lutensol® GD 70 (BASF AG) inniglich vermischt. Die so erhaltene Masse wurde, wie in Beispiel 1 beschrieben, extrudiert.

### Beispiel 3

In einem Moulinette-Küchenmixgerät wurden 52,5 g NH₄^{⊕}-Bentazon und 8,2 g AG 6202 (Ethylhexylglucosid, Fa. Akzo) inniglich vermischt. Die so erhaltene Masse wurde, wie in Beispiel 1 beschrieben, extrudiert.

### Beispiel 4

169,2 g trockenes Na⊕-Bentazon, 36,0 g Lutensol® GD 70, 88,8 g Ammoniumsulfat und 6,0 g Antischaummittel SRE wurden unter Zugabe von 36,0 g Wasser in einer Küchenmaschine (Kenwood Chef) homogenisiert und anschließend auf einem Dome-Extruder (DGL-1, Fa. Fitzpatrick, Lochdurchmesser 0,5 mm) extrudiert.

### Beispiel 5

169,2 g trockenes Na⊕-Bentazon, 36,0 g Lutensol® GD 70, 88,8 g Ammoniumsulfat und 6,0 g Siliconemulsion SLE (Fa. Wacker) wurden unter Zugabe von 36,0 g Wasser in einer Küchenmaschine (Kenwood Chef) homogenisiert und anschließend auf einem Dome-Extruder (DEL-1, Fa. Fitzpatrick, Lochdurchmesser 0,5 mm) extrudiert.

### Beispiel 6

59,0 g trockenes Na^{⊕}-Bentazon, 10,0 g Lutensol® GD 70, 27,0 g Ammoniumsulfat und 2,0 g Isotridecanol werden in einer Küchenmaschine (Kenwood-Chef) inniglich vermischt und anschließend extrudiert.

### Beispiel 7 (nicht erfindungsgemäß)

Eine Sprühmischung aus 410,5 g einer 50 Gew.-% wäßrigen Na^{⊕}-Bentazonlösung und 28,85 g Silwet® L77 (Siliconpolyethercopolymer, Fa. OSI) wurde hergestellt.

In einem Laborwirbelschichtgranulator wurden 65,7 g kristallines Ammoniumsulfat mit einer Korngröße kleiner als 0,5 mm vorgelegt. Über dem Wirbelboden befand sich eine Zweistoffdüse. Die Vorlage wurde mit Luft von 120°C Eingangstemperatur gewirbelt. Der Sprühdruck wurde auf 2,1 bar eingestellt. Die Sprühmischung wurde in die Wirbelschicht eingesprüht und das Wasser verdampft.

Zum Ende des Granulationsprozesses resultierte ein Granulat mit 60 Gew.-% Bentazon und 5,7 Gew.-% Silwet® L77.

### Beispiel 8

In 1350,0 g destilliertem Wasser wurden 1724,0 g trockenes Na⊕-Bentazon gelöst. Danach wurden 300,0 g AG® 6202 (Alkylpolyglucosid, Fa. Akzo) in Form einer 65 Gew.-% wäßrigen Lösung mit eingemischt und die Mischung als Sprühlösung verwendet. In einem Laborwirbelschichtgranulator (MP1, Fa. Niro-Aeromatic) wurden 465,0 g kristallines Ammoniumsulfat mit einer Korngröße kleiner als 0,5 mm vorgelegt. Über dem Wirbelboden befand sich eine Zweistoffdüse. Die Vorlage wurde mit Luft von 120°C Eingangstemperatur gewirbelt. Der Sprühdruck der Zweistoffdüse wurde auf 3 bar eingestellt. Die Sprühlösung wurde in die Wirbelschicht eingesprüht und das Wasser verdampft. Es resultierte ein Granulat mit 61,5 Gew.-% Na^{⊕}-Bentazon, 8 Gew.-% Alkylpolyglucosid und 1 Gew.-% Restfeuchte.

### Beispiel 9

In einer IKA®-Labormühle wurden 50,7 g Na⊕-Bentazon, 8,8 g Lutensol® GD 70, 8,5 g Natriumhydroxid und 2,8 g destilliertes Wasser vorgelegt und inniglich vermischt. Es setzte eine Reaktion ein, in deren Verlauf sich Na⊕-Bentazon bildete. Die entstandene zähflüssige Masse wurde mit 29,2 g Amoniumsulfat versetzt, und nach und nach wurden weitere 13,2 ml Wasser zugegeben. Es entstand eine feuchte Masse, die mittels eines Extruders (KAR-75, Fa. Fitzpatrick, Lochgröße 0,8 mm) extrudiert wurde. Das erhaltene Granulat wurde im Trockenschrank bei 60°C getrocknet.

### Beispiel 10 (nicht erfindungsgemäß)

In einer IKA®-Labormühle wurden 25,4 g Na⊕-Bentazon, 4,2 g Natriumhydroxid, 1,8 g Pluronic® PE 6400 (Fa. BASF) und 1,4 g Wasser inniglich vermischt bis eine deutliche Wärmetönung wahrnehmbar war. Dann gab man 17,2 g Ammoniumsulfat und weitere 13,5 ml Wasser hinzu. Die erhaltene Masse wurde, wie in Beispiel 8, extrudiert und getrocknet.

### Beispiel 11

In einem Kneter (Werner & Pfleiderer, LUK 0,75 Vak) wurden 303,0 g Bentazon, 72,0 g Lutensol® GD 70, 60,0 g Natriumhydroxid, 150,0 g Ammoniumsulfat, 6,0 g Antischaummittel SRE und 8,4 ml Wasser vorgemischt, homogenisiert und extrudiert, wie in Beispiel 8 beschrieben.

Die in den Beispielen 1 bis 3 und 7 bis 9 erhaltenen erfindungsgemäßen Mischungen lösen oder dispergieren sich innerhalb von zwei Minuten klar in Wasser.

### Anwendungsbeispiel

Die Steigerung der Wirkung von herbiziden PflanzenschutzWirkstoffen durch die erfindungsgemäßen Mischungen ließ sich durch Versuche im Gewächshaus und im Freiland belegen.

Bei Versuchen im Gewächshaus war es zur Absicherung von Wirkungsunterschieden wichtig, daß definierte Wachstums- und Behandlungsbedingungen eingehalten wurden.

Im Gewächshaus wurden die Testpflanzensamen in Plastiktöpfe von ca. 12 cm Durchmesser unter Verwendung eines torfhaltigen Substrats und nach Arten getrennt ausgesät.

Bei der Vorauflaufbehandlung wurden die in Wasser suspendierten oder emulgierten Wirkstoffe direkt nach der Einsaat mittels fein verteilender Düsen aufgebracht. Die Gefäße wurden leicht beregnet, um Keimung und Wachstum zu fördern, und sie wurden anschließend mit durchsichtigen Plastikhauben abgedeckt, bis die Pflanzen angewachsen waren. Diese Abdeckung bewirkt ein gleichmäßiges Keimen der Testpflanzen, sofern dies nicht durch die Wirkstoffe beeinträchtigt wurde.

Zum Zwecke der Nachauflaufbehandlung wurden die Testpflanzen je nach Wuchsform erst bis zu einer Wuchshöhe von 3 bis 15 cm angezogen und dann mit einer in Wasser gelösten suspendierten oder emulgierten erfindungsgemäßen Mischung behandelt. Die Testpflanzen wurden dafür entweder direkt gesät und in den gleichen Gefäßen aufgezogen oder sie wurden erst als Keimpflanzen getrennt angezogen und einige Tage vor der Behandlung in die Versuchsgefäße verpflanzt.

Die Pflanzen wurden artenspezifisch bei Temperaturen von 10 bis 25 bzw. 20 bis 35°C gehalten. Die Versuchsperiode erstreckte sich über 2 bis 4 Wochen. Während dieser Zeit wurden die Pflanzen gepflegt, und ihre Reaktion auf die einzelnen Behandlungen wurde ausgewertet.

Analog wurde bei Versuchen im Freiland oder unter freilandähnlichen Bedingungen verfahren. Die Kulturpflanzen und typische zugehörige unerwünschte Pflanzenarten wurden in parallelen Reihen ausgesät oder ausgepflanzt.

Teilweise wurden auch natürlich vorkommende Pflanzenpopulationen in die Untersuchungen einbezogen. In bestimmten Fällen wurden auch Pflanzen unter freilandartigen Bedingungen in Töpfen kultiviert.

Bewertet wurde nach einer Skala von 0 bis 100. Dabei bedeutet "100" kein Aufgang der Pflanzen bzw. völlige Zerstörung zumindest der oberirdischen Teile und "0" keine Schädigung oder normaler Wachstumsverlauf.

## Patentansprüche

1. Mischung, enthaltend
A) ein Salz von 3-Isopropyl-2,1,3-benzthiadiazin-4-on-2,2-dioxid und
B) mindestens ein Alkylglycosid oder Alkylpolyglycosid;
welche fest ist.

2. Mischung nach Anspruch 1, die weiterhin mindestens ein wasserlösliches anorganisches Salz aus folgender Gruppe enthält: Ammonium-, Alkalimetall- oder Erdalkalimetallsalz.

3. Mischung nach Anspruch 2, in der das wasserlösliche anorganische Ammoniumsalz Ammoniumsulfat ist.

4. Mischung nach den Ansprüchen 1 bis 3 in der als Komponente A das Natriumsalz von 3-Isopropyl-2,1,3-benzothiadiazin-4-on-2,2-dioxid verwendet wird.

5. Mischung nach den Ansprüchen 1 bis 4, die 0,5 bis 90 Gew.-% der Komponente A enthält.

6. Mischung nach den Ansprüchen 1 bis 5, die 3 bis 40 Gew.-% der Komponente B enthält.

7. Verfahren zur Herstellung einer Mischung gemäß den Ansprüchen 1 bis 6, **dadurch gekennzeichnet, daß** man die Komponenten vermischt und die so erhaltene Mischung granuliert.

8. Verfahren zur Bekämpfung von unerwünschtem Pflanzenwuchs, **dadurch gekennzeichnet, daß** man die Samen, die Pflanzen oder deren Lebensraum mit einer herbizid wirksamen Menge der Mischung gemäß den Ansprüchen 1 bis 6 behandelt.

## Claims

1. A mixture comprising
A) a salt of 3-isopropyl-2,1,3-benzothiadiazin-4-one 2,2-dioxide and
B) at least one alkylglycoside or alkylpolyglycoside;
which is solid.

2. A mixture as claimed in-claim 1 which furthermore comprises at least one water-soluble inorganic salt from amongst the following group: ammonium salt, alkali metal salt or alkaline earth metal salt.

3. A mixture as claimed in claim 2 in which the water-soluble inorganic ammonium salt is ammonium sulfate.

4. A mixture as claimed in any of claims 1 to 3 in which the sodium salt of 3-isopropyl-2,1,3-benzothiadiazin-4-one 2,2-dioxide is used as component A.

5. A mixture as claimed in any of claims 1 to 4 which comprises 0.5 to 90% by weight of component A.

6. A mixture as claimed in any of claims 1 to 5 which comprises 3 to 40% by weight of component B.

7. A process for the preparation of a mixture as claimed in any of claims 1 to 6 which comprises mixing the components and granulating the resulting mixture.

8. A method of controlling undesirable vegetation which comprises treating the seeds, the plants or their environment with a herbicidally active amount of the mixture as claimed in any of claims 1 to 6.

## Revendications

1. Mélange contenant :
A) un sel de 3-isopropyl-2,1, 3-benzothiadiazine-4-one-2,2 dioxyde et
B) au moins un glycoside d'alkyle ou un polyglycoside d'alkyle à l'état solide.

2. Mélange selon la revendication 1, contenant également au moins un sel inorganique soluble dans l'eau du groupe suivant : sel d'ammonium, de métal alcalin ou de métal alcalino-terreux.

3. Mélange selon la revendication 2, dans lequel le sel d'ammonium inorganique soluble dans l'eau est du sulfate d'ammonium.

4. Mélange selon les revendications 1 à 3, dans lequel on utilise comme composant A le sel de sodium du 3-isopropyl-2,1,3-benzothiadiazine-4-one-2,2 dioxyde.

5. Mélange selon les revendications 1 à 4 contenant de 0,5 à 90 % en poids du composant A.

6. Mélange selon les revendications 1 à 5 contenant de 3 à 40 % en poids du composant B.

7. Procédé de fabrication d'un mélange selon les revendications 1 à 6, **caractérisé en ce que** l'on mélange les composants et que l'on granule le mélange ainsi obtenu.

8. Procédé de lutte contre la végétation indésirable, **caractérisé en ce que** l'on traite les graines, les plantes ou leur espace vital avec des quantités à action herbicides du mélange selon les revendications 1 à 6.
